Europäisches Patentamt

European Patent Office

Office européen des brevets

(11) Numéro de publication: **0 246 130**

**A1**

## (12) DEMANDE DE BREVET EUROPEEN

(21) Numéro de dépôt: **87400952.5**

(22) Date de dépôt: **24.04.87**

(51) Int. Cl.⁴: **G 01 S 17/46**

(30) Priorité: **30.04.86 FR 8606265**

(43) Date de publication de la demande:
**19.11.87  Bulletin  87/47**

(84) Etats contractants désignés: **CH DE GB IT LI**

(71) Demandeur: **COMMISSARIAT A L'ENERGIE ATOMIQUE
31/33, rue de la Fédération
F-75015 Paris  (FR)**

(72) Inventeur: **Bonnefoy, Jean-Louis
100, rue du Tondu
F-33000 Bordeaux  (FR)**

**Prulhiere, Jean-Paul
16, rue Fernand Marin
F-33000 Bordeaux  (FR)**

(74) Mandataire: **Mongrédien, André et al
c/o BREVATOME 25, rue de Ponthieu
F-75008 Paris  (FR)**

(54) **Capteur de mesure linéaire sans contact de la distance d'une cible par rayonnement rétrodiffusé.**

(57)  Capteur de mesure linéaire sans contact, par rayonnement rétrodiffusé, de la distance (d) entre le capteur et une cible éventuellement en déplacement, comportant un émetteur de lumière envoyant sur la cible un faisceau lumineux, des moyens pour déterminer la distance(d) en se référant à la courbe I = f(d) qui traduit la relation entre la distance (d) et l'intensité rétrodiffusée, caractérisé en ce que les moyens d'analyse de l'intensité (I) de la lumière rétrodiffusée sont constitués de deux récepteurs voisins et parallèles mais espacés de l'émetteur, d'une part et entre eux d'autre part de façon telle que les secondes parties des graphes de leur loi $I_1 = f_1(d)$ et $I_2 = f_2(d)$ soient extérieures l'une à l'autre.

FIG. 3

EP 0 246 130 A1

## Description

<u>CAPTEUR DE MESURE LINEAIRE SANS CONTACT DE LA DISTANCE D'UNE CIBLE PAR RAYONNEMENT
RETRODIFFUSE</u>

La présente invention a pour objet un capteur de mesure linéaire sans contact, par rayonnement rétrodiffusé, de la distance séparant le capteur d'une cible éventuellement en déplacement.

On connaît déjà dans l'art antérieur des capteurs pour la mesure linéaire d'une telle distance tels que ceux qui sont décrits par exemple dans l'article "Utilisation de capteurs d'optique de proximité en robotique industrielle" pages 47 et suivantes de la revue "Le Nouvel Automatisme", mai-juin 1980, ou dans la demande de brevet français publié A-FR 83 17 183 du 27.10.83 pour "Proximètre à rayonnement rétrodiffusé utilisable notamment en télémanipulation robotique et système de traitement associé".

La plupart des dispositifs de ce genre fonctionnent en utilisant des capteurs composés d'un émetteur et d'un récepteur de rayonnement lumineux, séparés par une distance d l'un de l'autre, la cible dont on veut mesurer la distance d servant à la réflexion d'un rayonnement lumineux issu de l'émetteur et se réfléchissant en direction du récepteur.

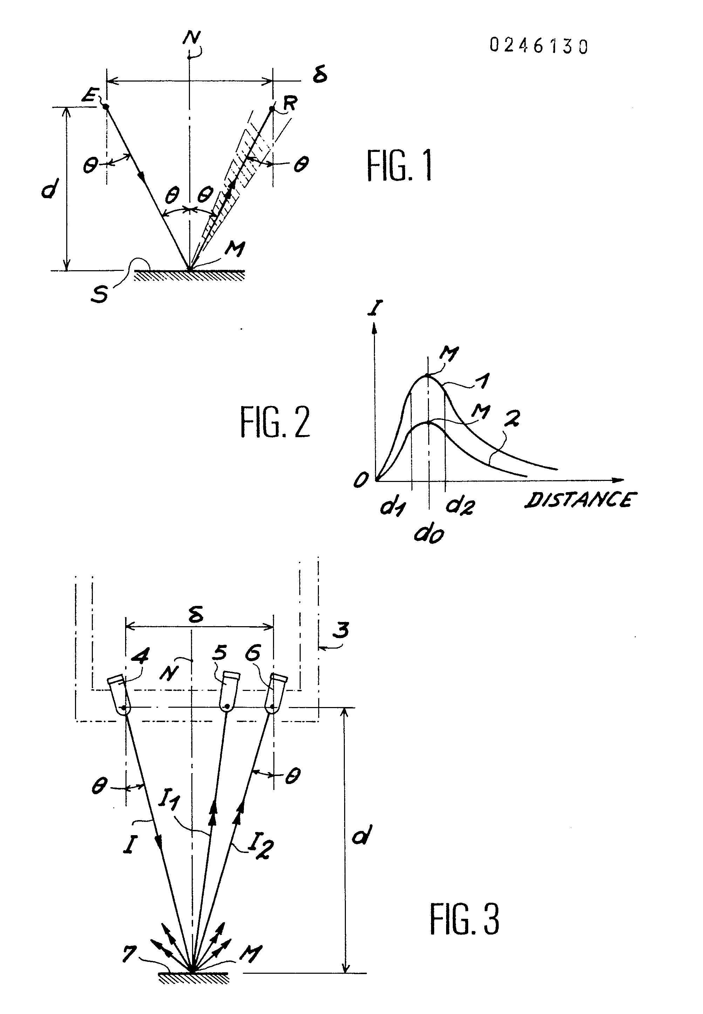

Un dispositif connu de ce genre est représenté très schématiquement sur la figure 1 où l'on voit un émetteur lumineux E et un récepteur R distants l'un de l'autre de δ et la surface S d'une cible mobile par rapport au capteur, la distance entre la surface S et le capteur étant égale à d. Un faisceau lumineux émis par l'émetteur E en direction du point M de la surface S est supposé faire l'angle $\theta$ avec la normale MN à la surface S au point M ; il est réfléchi selon la direction privélégiée $\theta$ vers le récepteur R. Une certaine dispersion de la lumière réfléchie existe, mais l'intensité maximale du faisceau rétrodiffusé se situe selon les lois de l'optique dans la direction angulaire $\theta$ , symétrique de la direction incidente par rapport à la normale MN.

Le dispositif de la figure 1 implique que l'émetteur E et le récepteur R sont inclinés d'un angle $\theta$ par rapport à la normale au support.

Si l'on étudie, dans un système de ce genre, l'intensité lumineuse I reçue par le récepteur R du capteur en fonction de la distance d qui sépare le capteur de la surface S de la cible, on obtient une courbe 1 qui a l'allure générale représentée sur la figure 2 ci-jointe. La courbe 1 partant de zéro se développe jusqu'à un maximum pour la distance $d = d_0$ et redécroît ensuite asymptotiquement jusqu'à une valeur nulle lorsque la distance d tend vers l'infini. Autrement dit, il existe, pour une constitution géométrique donnée de l'ensemble de la figure 1, une distance $d_0$ du capteur à la cible pour lequel l'intensité du signal reçu par le récepteur R est maximale. Si l'on modifie les propriétés physiques de la surface S de la cible, on peut obtenir d'autres courbes telles que la courbe 2 par exemple dont le maximum se situe à une amplitude inférieure, mais tous les maximums des différentes courbes ont tous lieu pour la même valeur $d_0$ de la distance d. Pour la suite du présent exposé, nous remarquerons que l'on peut diviser le parcours des graphes 1 et 2 précédents représentant les lois I = F(d) en trois portions, à savoir : une première portion de d = 0 à $d = d_1$ dans laquelle le graphe représentant la fonction I = F(d) est pratiquement une droite et où par conséquent la loi I = F(d) est linéaire ; une deuxième portion s'étendant de la valeur $d_1$ à la valeur $d_2$ de d, c'est-à-dire au voisinage du maximum M de chacun des graphes 1 et 2, où les courbes précédentes sont sensiblement quadratiques, c'est-à-dire qu'elles pourraient être représentées par un développement parabolique dont l'expression mathématique serait voisine de $I = K_1 + K_2 d + K_3 d^2$ ; enfin, entre la valeur $d = d_2$ et l'infini, une troisième partie où la fonction I = F(d) est sensiblement parabolique décroissante et peut être représentée mathématiquement de façon simplifiée par une fonction du genre $I = k/Vd$.

Dans tous les capteurs de mesure de distance ou proximètres optiques utilisés jusqu'à ce jour, on a utilisé seulement la première partie linéaire des graphes précédents c'est-à-dire celle qui sépare la distance nulle de la distance $d = d_1$, de façon évidemment à pouvoir disposer d'un capteur qui exprime le résultat de la mesure recherchée par une grandeur analogique pratiquement proportionnelle à la distance que l'on veut mesurer. De tels capteurs fonctionnent correctement, mais on conçoit que la limitation que l'on s'impose dans ce cas pour la plage de mesure par rapport à l'ensemble des graphes de la figure 2, constitue une limitation sérieuse du domaine d'application de ces appareils, surtout pour les valeurs supérieures de la distance d.

La présente invention a précisément pour objet un capteur de mesure linéaire, sans contact, par rayonnement rétrodiffusé, de la distance d séparant le capteur d'une cible éventuellement en déplacement, et qui permet l'utilisation à la fois de la première et de la troisième parties des graphes de la figure 2. En d'autres termes, ce capteur travaille en écartant uniquement la zone parabolique située pour les graphes de la figure 2 au voisinage immédiat du maximum M de ceux-ci. On obtient ainsi une bien meilleure définition et une précision plus grande du résultat recherché.

Ce capteur de mesure linéaire, comportant l'émetteur de lumière renvoyant sur la cible un faisceau lumineux sous une incidence $\theta$ , des moyens d'analyse de l'intensité I de la partie de cette lumière rétrodiffusée par la cible selon la direction de réflexion privilégiée faisant avec la normale à la cible l'angle de réflexion $\theta$ , des moyens pour déterminer la distance d en se référant à la courbe I = f(d) qui traduit la relation, pour le capteur utilisé, entre la distance d recherchée et l'intensité rétrodiffusée effectivement mesurée dans la direction $\theta$ , ladite courbe comportant généralement et de façon connue une première partie sensiblement linéaire, une seconde partie sensiblement quadratique au voisinage de son maximum et une troisième partie sensiblement parabolique décroissante caractérisé en ce que les moyens d'analyse de l'intensité I de la lumière rétrodiffusée sont constitués de deux récepteurs voisins et parallèles mais espacés de l'émetteur, d'une part et entre eux d'autre part de façon telle que les secondes parties des graphes de leur loi $I_1=f_1(d)$ et $I_2=f_2(d)$ soient extérieures l'une à l'autre, et qu'une distance d quelconque soit ainsi toujours lisible sur l'une au moins des première et seconde parties des graphes représentatifs des lois $I_1=f_1(d)$ et $I_2=f_2(d)$, lesdites troisièmes portions étant exploitées après linéarisation par tout moyen électronique connu.

La caractéristique essentielle du capteur objet de la présente invention réside par conséquent dans le fait qu'il utilise simultanément deux récepteurs voisins et parallèles pour analyser et mesurer l'intensité I de lumière rétrodiffusée par la surface de la cible que l'on cherche à explorer. En effet, l'expérience a montré qu'il était possible, en choisissant judicieusement les caractéristiques géométriques du capteur (distance entre l'émetteur et les récepteurs, angle d'inclinaison des émetteurs et des récepteurs par rapport à la normale à la surface à explorer, distance des deux récepteurs l'un par rapport à l'autre) d'obtenir que les graphes représentatifs des lois $I_1=f_1(d)$ et $I_2=f_2(d)$ aient leur seconde partie, de forme sensiblement quadratique au voisinage de leur maximum, extérieures l'une à l'autre.

Dans ces conditions il est possible, quelle que soit la distance d de la cible que l'on désire explorer, d'éliminer les deux zones quadratiques autour du maximum de chacune des deux courbes tout en ayant la possibilité pour toute valeur de la distance d de travailler sur la partie rectiligne ou la partie parabolique (c'est-à-dire la première ou la troisième partie) de l'un des graphes précédents.

Si l'on travaille sur la partie rectiligne ascendante de l'un des graphes précédents, la lecture de d est effectivement linéaire en fonction de la tension analogique émise par le récepteur sous l'influence de l'intensité lumineuse qu'il reçoit. Si l'on travaille sur la troisième partie de l'une des deux courbes, c'est-à-dire la partie parabolique, il suffit d'adapter une correction de forme $k/\sqrt{V}$ pour linéariser l'indication du récepteur, formule dans laquelle k est une constante et V désigne la tension recueillie à la sortie du récepteur.

On voit donc que dans tous les cas de figure possible, l'utilisation de deux récepteurs et le fait de travailler à l'aide de deux graphes distincts dont chacun correspond à l'un des récepteurs, permet d'obtenir en sortie une tension analogique directement proportionnelle à la distance d à mesurer.

Selon une caractéristique intéressante de la présente invention, on constitue le capteur de mesure de façon telle que la partie du graphe $I_2$ qui s'étend de leur origine jusqu'à son point d'intersection avec le graphe $I_1$ soit toute entière comprise dans la première partie sensiblement linéaire de ce graphe $I_2$.

Dans ce mode de réalisation du capteur objet de l'invention, il est alors possible de mesurer la distance d sur la partie rectiligne ascendante du récepteur 2 jusqu'à l'intersection des deux graphes précédents et sur la troisième partie descendante parabolique du graphe 1 pour des distances supérieures à celle qui correspond à l'intersection des deux graphes précédents. Ceci sera précisé et rendu plus intelligible lors de la description qui suivra en se référant aux figures.

Enfin, il est bien évident que pour affiner la précision des mesures obtenues à l'aide du capteur lénaire objet de l'invention, il est intéressant, à chaque fois que cela est possible, de combiner les indications reçues par les deux récepteurs, en faisant, la moyenne par exemple.

Les moyens de mesure utilisés à la sortie des deux récepteurs lumineux exploitent les tensions analogiques $V_1$ et $V_2$ qu'ils génèrent et les exploitent pour en tirer des indications proportionnelles à la distance d à mesurer. Un simple étalonnage de l'appareil permet d'obtenir la valeur absolue de cette mesure.

A cet effet, divers circuits électroniques automatiques peuvent être envisagés, dont certains sont néanmoins plus simples ou plus intéressants que d'autres. Ainsi, selon un mode de réalisation spécialement intéressant du capteur de mesure objet de l'invention, celui-ci est muni de moyens électroniques de comparaison des tensions analogiques $V_1$ et $V_2$ émises par les capteurs recevant les intensités rétrodiffusées $I_1$ et $I_2$ et de moyens de multiplexage analogique commandés par ces moyens de comparaison et délivrant en sortie, selon la valeur du rapport $V_1/V_2$ par rapport à l'unité, soit un signal égal à $1/\sqrt{V_1}$ dans l'hypothèse où $V_1/V_2 < 1$, soit un signal égal à $V_2$ si $V_1/V_2 \geq 1$, c'est-à-dire, dans tous les cas un signal analogique proportionnel à la valeur de la distance d recherchée.

Comme dans l'art antérieur, il est intéressant, notamment pour éliminer certains parasites optiques de travailler sur une lumière hachée dans le temps sous forme de flashes, ce qui permet d'avoir des puissances lumineuses instantanées importantes à l'émission et de diminuer ainsi, en valeur relative, l'importance d'un signal parasite optique éventuel.

Ceci est d'ailleurs déjà connu par le brevet français publié A-FR-83 17 183 et l'on n'entrera pas davantage dans les considérations sur cette façon d'utiliser l'énergie lumineuse émise, retrodiffusée, et reçue dans le capteur.

De toute façon l'invention sera mieux comprise en se référant à la description qui suit d'un exemple de mise en oeuvre donné à titre explicatif et non limitatif en se référant aux figures 3 à 5 ci-jointes sur lesquelles :   - la figure 3 est un schéma de principe de la constitution générale du capteur objet de l'invention ;

- la figure 4 est un schéma montrant dans un mode de mise en oeuvre préférentiel la disposition réciproque des deux graphes $I_1$ et $I_2$.

La figure 5 montre un mode de mise en oeuvre possible du schéma électronique de lecture des informations analogiques délivrées par les deux récepteurs du capteur.

Sur la figure 3 on voit, monté sur un bâti 3, l'émetteur de flashes lumineux 4 constitué par exemple d'une diode électroluminescente ainsi que les deux récepteurs 5 et 6 constitués par exemple de phototransistors. Par rapport à la normale commune MN à la cible 7 et au bâti 3, les détecteurs et récepteurs 4, 5 et 6 sont inclinés d'un angle $\Theta$ en direction de cette cible 7. La distance entre l'émetteur 4 et les deux récepteurs 5 et 6 est égale à $\delta$, l'écart entre les deux récepteurs 5 et 6, volontairement très exagéré sur la figure 3 pour en faciliter la lecture, n'est dans la réalité que de quelques centimètres au maximum, alors que la distance $\delta$ est facilement de 20 ou 30cm. La distance entre le bâti 3 et la cible 7 est égale à d, valeur que le capteur objet de l'invention a précisément pour objet de mesurer avec précision. Des trajets indiqués en traits continus et fléchés sur la figure 3, montrent d'une part le trajet principal de l'intensité lumineuse I émise par l'émetteur 4 en direction du point M de la cible 7, et les intensités $I_1$ et $I_2$ rétrodiffusées par cette même cible 7 en direction des phototransistors 5 et 6.

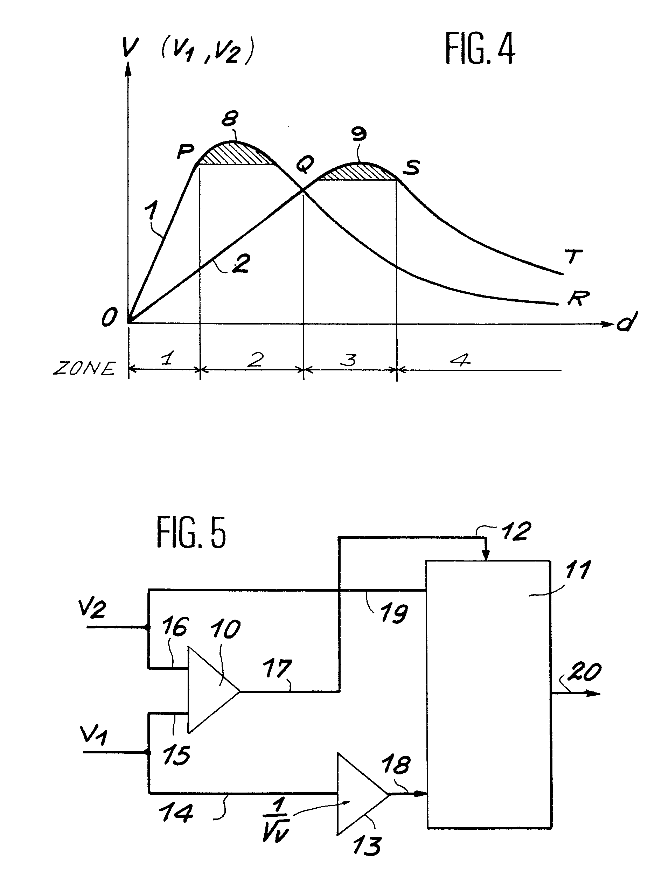

En se référant maintenant à la figure 4, on voit représentée sur celle-ci en ordonnées, la tension V analogique émise par chacun des phototransistors 5 et 6 sous l'effet de l'impact des intensités $I_1$ et $I_2$ qu'ils reçoivent en provenance de la cible 7. En abscisses, on a représenté la valeur d de la distance recherchée entre le support 3 et la cible 7.

Sur la figure 4, on a représenté les deux graphes 1 et 2 représentatifs chacun de la tension V générée respectivement par les phototransistors 5 pour le graphe 1 et 6 pour le graphe 2. Comme expliqué déjà précédemment, l'homme de l'art sait choisir, sans effort inventif, les dimensions géométriques $\delta$, ainsi que l'écart entre les récepteurs 5 et 6 et les angles $\Theta$ pour que les deux graphes 1 et 2 soient dans la disposition réciproque de la figure 3, c'est-à-dire que leurs deux zones paraboliques 8 et 9 situées au voisinage de leur sommet soient extérieures l'une à l'autre dans le plan V, d. De cette façon, on peut éliminer la portion hachurée correspondante des graphes et se contenter d'utiliser, pour lire les indications des récepteurs 5 et 6, les portions OP et QR du graphe 1 et les portions OQ et ST du graphe 2 telles qu'elles sont représentées sur la figure 3. Q représente le point d'intersection des graphes 1 et 2, extérieur lui aussi aux deux zones paraboliques 8 et 9 que l'on élimine conformément à l'invention.

La disposition réciproque des deux graphes 1 et 2 de la figure 4 telle qu'elle vient d'être explicitée, permet de définir quatre zones désignées sur cette figure 4 respectivement par les indications zone 1, zone 2, zone 3 et zone 4.

Pour lire les résultats fournis par le capteur, différentes méthodes possibles sont envisageables.

On peut par exemple, si la valeur de la distance d se situe dans la zone 1, faire la moyenne entre les indications de tension $V_1$ et $V_2$ données respectivement par les récepteurs 5 et 6 et les graphes 1 et 2.

Si la valeur de la distance d à mesurer se situe dans la zone 2, on voit d'après la figure 3, qu'on ne peut alors exploiter que la tension $V_2$ (graphe 2) fournie par le récepteur 6.

Si la valeur de la distance d à déterminer se situe dans la zone 3, on exploitera alors le signal électrique $V_1$ (graphe 1) fourni par le récepteur 5 après lui avoir fait subir une linéarisation, c'est-à-dire une division par le facteur $K/\sqrt{V}$).

Enfin, si la valeur de d recherchée se situe dans la zone 4, on peut à volonté soit travailler sur l'une des tensions $V_1$ ou $V_2$ fournies par les récepteurs 5 et 6 après les avoir linéarisées, ou même utiliser les deux résultats précédents dont on effectue la moyenne.

On voit ainsi que, conformément à l'invention, l'utilisation de deux récepteurs optiques simultanés 5 et 6 dont les graphes 1 et 2 sont disposés selon le schéma de la figure 4, permet d'étendre considérablement, notamment vers les distances d élevées, le domaine d'application des proximètres optiques de l'art antérieur qui, comme expliqué à propos de la figure 1, n'envisageaient pratiquement que l'utilisation de la partie rectiligne ascendante de chaque graphe et impliquaient donc une limitation sérieuse des valeurs de d mesurables au bénéfice des courtes distances.

En se référant maintenant à la figure 5, on va décrire l'un des circuits préférentiels utilisés pour obtenir une lecture directe de la valeur de la distance d recherchée en fonction des tensions de sortie $V_1$ et $V_2$ des récepteurs 5 et 6.

Le schéma de la figure 5 comprend essentiellement un comparateur 10 et un multiplexeur analogique 11 commandé par la sortie du comparateur 10 précédent au travers d'une ligne 12 ainsi qu'un circuit de linéarisation 13 transformant un signal V en un signal $1/\sqrt{V}$ et recevant la tension $V_1$ par la ligne 14. Le comparateur 10 a deux entrées 15 et 16 recevant respectivement les tensions $V_2$ et $V_2$ et une sortie 17 alimentant par la ligne 12 la commande du multiplexeur analogique 11. Ce dernier a deux entrées 18 et 19. L'entrée 18 reçoit le signal de sortie du système de linéarisation 13 et l'entrée 19 reçoit directement la tension $V_2$ du récepteur lumineux 6. A la sortie 20 du multiplexeur analogique 11 se trouve présent un signal analogique qui, en toutes circonstances, est proportionnel à la distance d à mesurer entre le support 3 et le capteur et la cible 7.

En effet, le comparateur 10 est réglé de façon telle qu'il fournit à sa sortie 17 un signal nul si la tension $V_1$ est inférieure à la tension $V_2$ et un signal $= 1$ si la tension $V_1$ est supérieure ou égale à la tension $V_2$.

Si le signal de sortie en 17 du comparateur 10 est $= 1$, cela signifie que la tension $V_1$ est plus grande que la tension $V_2$ et que l'on se situe par conséquent dans l'une des zones 1 et 2 de la figure 4. A ce moment, le multiplexeur analogique 11 est commandé par la ligne 12 pour laisser sortir en 20 la tension $V_2$ sur laquelle on fait directement la mesure, puisque c'est la partie linéaire du graphe 2.

Si au contraire, à la sortie 17 du comparateur 10, le signal est nul, cela signifie que la tension $V_1$ est plus petite que la tension $V_2$ et que l'on se situe alors dans l'une des zones 3 et 4 de la figure 4. A ce moment, la ligne 12 de commande du multiplexeur analogique 11 fait que ce dernier émet, en sa sortie 20, le signal présent sur son entrée 18 c'est-à-dire en l'occurrence un signal proportionnel à $1/\sqrt{V_1}$. C'est le signal qui correspond à la partie parabolique décroissante de la courbe 1 de la figure 3.

On voit ainsi que le schéma électronique de la figure 5 permet d'obtenir automatiquement sur la sortie 20 du multiplexeur analogique 11, un signal analogique proportionnel, dans tous les cas, à la distance d que l'on désire mesurer.

**Revendications**

1. Capteur de mesure linéaire sans contact, par rayonnement rétrodiffusé, de la distance (d) entre un capteur et une cible éventuellement en déplacement par rapport au capteur, comportant un émetteur de lumière envoyant sur la cible un faisceau lumineux sous une incidence $\Theta$, des moyens d'analyse de l'intensité (I) de la partie de cette lumière rétrodiffusée par la cible selon la direction de réflexion privilégiée faisant avec la normale à la cible l'angle de réflexion $\Theta$, des moyens pour déterminer la distance d en se référant à la courbe $I = f(d)$ qui traduit la relation, pour le capteur utilisé, entre la distance (d) recherchée et l'intensité rétrodiffusée effectivement mesurée dans la direction $\Theta$, ladite courbe comportant généralement et de façon connue une première partie sensiblement linéaire, une seconde partie sensiblement quadratique au voisinage de son maximum et une troisième partie sensiblement parabolique décroissante caractérisé en ce que les moyens d'analyse de l'intensité (I) de la lumière rétrodiffusée sont constitués de deux récepteurs voisins et parallèles mais espacés de l'émetteur, d'une part et entre eux d'autre part de façon telle que les secondes parties des graphes de leur loi $I_1 = f_1(d)$ et $I_2 = f_2(d)$ soient extérieures l'une à l'autre, et qu'une distance d quelconque soit ainsi toujours lisible sur l'une au moins des première et seconde parties des graphes représentatifs des lois $I_1 = f_1(d)$ et $I_2 = f_2(d)$, lesdites troisièmes portions étant exploitées après linéarisation par tout moyen électronique connu.

2. Capteur de mesure selon la revendication 1, caractérisé en ce que la partie du graphe $I_2$ qui s'étend de l'origine jusqu'à son point d'intersection avec le graphe $I_1$ soit toute entière comprise dans la première partie sensiblement linéaire de ce graphe $I_2$.

3. Capteur de mesure selon la revendication 2, caractérisé en ce qu'il est muni de moyens électroniques de comparaison des tensions analogiques $V_1$ et $V_2$ émises par les capteurs recevant les intensités rétrodiffusées $I_1$ et $I_2$ et de moyens de multiplexage analogique commandés par ces moyens de comparaison et délivrant en sortie, selon la valeur du rapport $V_1/V_2$ par rapport à l'unité, soit un signal égal à $1/\sqrt{V}$ dans l'hypothèse où $V_1/V_2 < 1$, soit un signal égal à $V_2$ si $V_1/V_2 \geqq 1$, c'est-à-dire, dans tous les cas un signal analogique proportionnel à la valeur de la distance d recherchée.

0246130

FIG. 1

FIG. 2

FIG. 3

0246130

FIG. 4

$V$ $(V_1, V_2)$

ZONE

FIG. 5

$V_2$

$V_1$

$\frac{1}{V_v}$

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | FR-A-2 554 244  (COMMISSARIAT A L'ENERGIE ATOMIQUE) <br> * Page 6, ligne 26 - page 8, ligne 22; figures 1-3 * | 1 | G 01 S  17/46 |
| A | | 2 | |
| | --- | | |
| Y | US-A-3 771 873  (J. TOURRET) <br> * Colonne 3, ligne 38 - colonne 10, ligne 2; figures 3-6 * | 1 | |
| A | | 3 | |
| | --- | | |
| A | US-A-4 484 069  (I.R. BRENHOLDT) <br> * Colonne 6, ligne 36 - colonne 7, ligne 29; figures 4,5 * | 1 | |
| | --- | | **DOMAINES TECHNIQUES RECHERCHES (Int. Cl.4)** |
| A | FR-A-2 508 160  (COMPAGNIE INDUSTRIELLE DES LASERS) <br> * Page 3, ligne 29 - page 9, ligne 7; figures 1-3 * | 1,2 | G 01 S <br> G 01 C <br> G 01 B |
| | --- | | |
| A | FR-A-2 399 000  (S.A. GEM) <br> * En entier * | 1,2 | |
| | --- | | |
| A | GB-A-2 069 286  (ASAHI KOGAKU KOGYO) <br> * Page 2, lignes 49-129; figures 4,5 * | 3 | |

----

Le présent rapport de recherche a été établi pour toutes les revendications

| Lieu de la recherche | Date d'achèvement de la recherche | Examinateur |
|---|---|---|
| LA HAYE | 07-08-1987 | VAN WEEL .E.J.G. |